# FASCICULE DE BREVET EUROPEEN

(11) **EP 2 516 569 B1**
(45) Date de publication et mention de la délivrance du brevet: **20.07.2016**
(21) Numéro de dépôt: 10795687.2
(22) Date de dépôt: 20.12.2010
(51) Int. Cl.: C09D 183/04, B01J 23/40, B01J 23/42, C08K 3/32, C08K 5/05, C08K 5/09, C08K 5/092, C08K 5/095, C08G 77/12, C08G 77/20, C08L 83/04

(54) **INHIBITEURS DE REACTION D'HYDROSILYLATION, ET LEUR APPLICATION DANS UN PROCEDE D'ENDUCTION**
HYDROSILYLIERUNGSREAKTIONSHEMMER UND IHRE VERWENDUNG BEI EINEM BESCHICHTUNGSVERFAHREN
HYDROSILYLATION REACTION INHIBITORS, AND USE THEREOF IN A COATING METHOD

(30) Priorité: 23.12.2009 FR 0906316
(43) Date de publication de la demande: 31.10.2012
(73) Titulaire: Bluestar Silicones France, 69003 Lyon (FR)
(72) Inventeur: MARROT, Sébastien, F-69006 Lyon (FR); MAADADI, Yassine, F-69330 Meyzieu (FR)
(74) Mandataire: Mekki, Boualem
(86) Numéro de dépôt international: PCT/EP2010/070197
(87) Numéro de publication internationale: WO 2011/076710

(56) Documents cités:
- JP-A- 2007 131 750
- US-A- 6 124 419
- US-A1- 2005 282 453
- US-A1- 2007 054 137
- US-A1- 2007 167 563
- US-A1- 2008 006 179

## Description

La présente invention concerne un procédé d'enduction dans lequel on utilise des composés inhibiteurs de la réaction d'hydrosilylation.

Lorsqu'il est nécessaire d'accroître la durée de vie en pot des compositions d'organopolysiloxane durcissables par addition, ou de fournir une composition d'organopolysiloxane durcissable par addition à un seul composant, il est d'usage d'incorporer un inhibiteur de durcissement. Les inhibiteurs de durcissement sont des composés qui ralentissent le durcissement aux températures ambiantes, mais qui ne retardent pas le durcissement aux températures plus élevées. Ces inhibiteurs de durcissement sont suffisamment volatils pour être chassés des compositions de revêtement.

Il est connu, voir par exemple le brevet U.S. N° 3 445 420, d'utiliser des composés acétyléniques tels que les alcools acétyléniques de point d'ébullition inférieur à 250°C, notamment le 2-méthyl 3-butyne 2-ol et l'éthynylcyclohexanol, comme inhibiteurs d'hydrosilylation dans des compositions silicones durcissables à base d'un polymères organosilicique portant des substituants à insaturation oléfinique (vinylique notamment), d'un polymère organohydrogénosiloxane et d'un catalyseur du type platine ou composé du platine.

La présence de ces composés acétyléniques inhibe le catalyseur au platine en l'empêchant de catalyser la réaction de durcissement à la température ambiante, mais non à température élevée. En effet, les compositions silicones durcissables qui contiennent ce type d'inhibiteur peuvent être durcies en augmentant la température de la composition à une température supérieure au point d'ébullition ou de sublimation de l'inhibiteur, en évaporant ainsi l'inhibiteur, ou une partie de l'inhibiteur, et en permettant au catalyseur de catalyser la réaction d'hydrosilylation et par conséquent de durcir la composition silicone.

L'utilité de ces compositions est reconnue et permet de transporter les compositions sous un seul emballage au lieu de deux. Ils peuvent aussi servir à prolonger le temps de mise en oeuvre ou la durée de vie en pot, en comparaison de compositions ne contenant pas le composé acétylénique.

Il est connu d'utiliser des stabilisants avec des inhibiteurs de la réaction de polyaddition. On peut citer par exemple un ester silylé de l'acide phosphorique qui est vendu sous l'appellation " SOL 110 " ou " SOLUTION 110 " par la société Bluestar Silicones (anciennement Rhodia Silicones et plus anciennement encore Rhone-Poulenc Silicones). Ce stabilisant est cité par exemple dans la demande US-2005-0282453 (page 12, paragraphe [0268]) ou la demande internationale WO1999005231 (page 13, ligne 13).

Ces compositions peuvent être déposées sur des supports tels que le papier, par enduction par exemple et durcies thermiquement à une température de l'ordre de 80 à 250°C, notamment entre 100 et 220°C voir par exemple les brevets FR-A-1 528 464 et FR-A-2 372 874.

Ces compositions présentent l'inconvénient, pour la préparation de revêtements antiadhérents, de ne pouvoir réticuler sur le support à une température inférieure à 80°C et de présenter une stabilité insuffisante en cours d'enduction sur machine, la gélification du bain d'enduction se manifestant déjà au bout d'une heure. Cela est du au fait que ces inhibiteurs sont sublimables. Cet inconvénient majeur exige de les utiliser en quantité importante, ce qui se traduit par une forte inhibition de l'activité du platine et par voie de conséquence à un ralentissement de la vitesse de réticulation ce qui oblige à réduire les cadences d'enduction.

La référence US-2008/006179 décrit un procédé d'enduction sur un support souple (tissu de polyamide 6,6) d'une composition réticulable par des réactions de polyaddition comprenant un inhibiteur, le 1-éthynyl-1-cyclohexanol , et de l'acide citrique.

Force est donc de constater que les propositions techniques antérieures n'apportent pas de solutions satisfaisantes au problème exposé ci-dessus.

L'un des objectifs essentiels de la présente invention est de fournir un procédé d'enduction sur un support souple mettant en oeuvre une composition silicone **X** susceptible de durcir par une réaction de polyaddition qui est:
- stable pendant plusieurs heures lors des opérations d'enduction sur machine ;
- réticule rapidement sur support souple à une température de durcissement inférieure à 80°C, de préférence même inférieure à 75°C ;
- présentant une grande stabilité de bain à 40°C, et
- pouvant éventuellement contenir des quantités inférieures de catalyseur d'hydrosilylation, étant donné qu'une quantité importante d'inhibiteur n'est plus nécessaire.

Ainsi l'objet principal de l'invention consiste en un procédé d'enduction sur un support souple **S** d'une composition silicone **X** précurseur d'un élastomère et réticulable par des réactions de polyaddition comprenant les étapes a), b) et c) suivantes :
a) on prépare une composition silicone **X̅** réticulable en élastomère par des réactions de polyaddition, comprenant:
   (1) au moins un organopolysiloxane **A** comportant par molécule au moins deux radicaux alcényles liés à des atomes de silicium,
   (2) au moins un organohydrogénopolysiloxane **B** comportant par molécule au moins deux atomes d'hydrogène liés à des atomes de silicium,
   (3) au moins un catalyseur **C** composé d'au moins un métal appartenant au groupe du platine;
   (4) au moins un inhibiteur **D** qui est susceptible d'être obtenu par mélange, éventuellement in situ:
      - d'au moins un inhibiteur **D1** qui est un alcool α-acétylénique de formule **(1)** suivante :

         (R¹)(R²)C(OH)-C=CH **(1)**
      - les radicaux R¹ et R², identiques ou différents, représentent, indépendamment l'un de l'autre, un groupe alkyle monovalent linéaire ou ramifié, un groupement cycloalkyle, un groupe (cycloalkyl)alkyle, un groupement aromatique ou un groupe arylalkyle, et
      - les radicaux R¹ et R² peuvent être liés deux à deux de manière à former un cycle aliphatique à 5, 6, 7 ou 8 chaînons éventuellement substitué par un ou plusieurs substituants, et
      - d'au moins un acide **D2** présentant en solution aqueuse et à 25 °C au moins un pKa dont la valeur est comprise dans l'intervalle suivant -0,9 ≤ pKa ≤ +6,5 et qui est l'acide orthophosphorique ou l'acide heptanoïque, lesdits constituants **D1** et **D2** étant initialement présents dans ladite composition silicone **X** dans des quantités suffisantes pour:
         - maintenir l'inhibition du catalyseur **C** de manière à éviter la formation d'un gel ou d'un élastomère lorsque ladite composition silicone **X** est stockée à température ambiante, et
         - permettre la dégradation partielle ou complète dudit alcool acétylénique **D1** par réaction chimique entre l'inhibiteur **D1** et l'acide **D2** lorsque la composition silicone **X** est durcie par chauffage à une température supérieure à 60 °C, et
         - avec la condition supplémentaire que ladite composition silicone **X** ne contient pas d'eau et en ce que le ratio molaire [inhibiteur D1]/[catalyseur C] est compris entre 10 et 60 et le ratio molaire [acide D2]/[catalyseur C] est compris entre 10 et 60,
b) puis on dépose de manière continue ou discontinue ladite composition silicone **X** sur ledit support souple **S,** et
c) on fait réticuler la composition silicone **X** par chauffage à une température supérieure à 60 °C, de préférence comprise entre 70 °C et 200 °C.

La demanderesse a trouvé de façon tout-à-fait inattendue, ce qui fait précisément l'objet de la présente invention, que l'emploi, comme inhibiteur d'hydrosylilation dans des compositions du même type, d'un mélange d'un inhibiteur **D1** qui est un alcool α-acétylénique de formule **(1)** avec un acide **D2** présentant en solution aqueuse et à 25 °C au moins un pKa dont la valeur est comprise dans l'intervalle suivant -0,9 ≤ pKa ≤ +6,5 et qui est l'acide orthophosphorique ou l'acide heptanoïque, permet d'obtenir des compositions pour l'enduction de support souple:
- stables pendant plusieurs heures lors des opérations d'enduction sur machine;
- réticulant rapidement sur support à une température de durcissement inférieure à 90 °C,
- présentant une bonne stabilité de bain à 40 °C, et
- pouvant éventuellement contenir des quantités inférieures de catalyseur d'hydrosilylation, étant donné qu'une quantité importante d'inhibiteur n'est plus nécessaire.

La définition de l'acide **D2** selon l'invention ne comprend pas un ester silylé de l'acide phosphorique qui est vendu sous l'appellation " SOL 110 " ou " SOLUTION 110 " par la société Bluestar Silicones (anciennement Rhodia Silicones et plus anciennement encore Rhone-Poulenc Silicones) et tel que cité par exemple dans la demande US-2005-0282453 (page 12, paragraphe [0268]) ou la demande internationale WO1999005231 (page 13, ligne 13).

Selon un mode de réalisation préférentiel, le support souple **S** est en papier, en textile, en carton, en métal ou en matière plastique.

De préférence le support souple **S** est en textile, en papier, en polychlorure de vinyle (PVC), en polyester, en polypropylène, en polyamide, en polyéthylène, en polyuréthanne, en tissus de fibres de verre non tissés ou en polyéthylène téréphtalate (PET).

L'acide D2 est choisi parmi les acides présentant en solution aqueuse et à 25 °C au moins un pKa dont la valeur est comprise dans l'intervalle suivant - 0,9 ≤ pKa ≤ +6,5 et dans le groupe constitué par l'acide orthophosphorique et l'acide heptanoïque.

D'une manière préférée, le ratio molaire [inhibiteur **D1**]/[acide **D2**] est compris entre 0,1 et 10, de préférence entre 0,5 et 5.

Le ratio molaire [inhibiteur **D1**]/[catalyseur **C**] est compris entre 10 et 60 et le ratio molaire [acide **D2**]/[catalyseur **C**] est compris entre 10 et 60.

Un inhibiteur **D1** qui est un alcool α-acétylénique utile selon l'invention peuvent être choisis parmi le groupe constitué par les composés suivants:
1-éthynyl-1-cyclopentanol ; 1-éthynyl-1-cyclohexanol ; 1-éthynyl-1-cycloheptanol ; 1-éthynyl-1-cyclooctanol ; 3-méthyl-1-butyn-3-ol ; 3-méthyl-1-pentyn-3-ol ; 3-méthyl-1-hexyn-3-ol ; 3-méthyl-1-heptyn-3-ol ; 3-méthyl-1-octyn-3-ol ; 3-méthyl-1-nonyn-3-ol ; 3-méthyl-1-decyn-3-ol ; 3-méthyl-1-dodecyn-3-ol ; 3-éthyl-1-pentyn-3-ol ; 3-éthyl-1-hexyn-3-ol ; 3-éthyl-1-heptyn-3-ol ; 3-butyn-2-ol ; 1-pentyn-3-ol ; 1-hexyn-3-ol ; 1-heptyn-3-ol ; 5-méthyl-1-hexyn-3-ol ; 3,5-diméthyl-1-hexyn-3-ol ; 3-isobutyl-5-méthyl-1-hexyn-3-ol ; 3,4,4-triméthyl-1-pentyn-3-ol ; 3-éthyl-5-méthyl-1-heptyn-3-ol ; 4-éthyl-1-octyn-3-ol ; 3,7,11-triméthyl-1-dodecyn-3-ol ; 1,1-diphényl-2-propyn-1-ol et 9-éthynyl-9-fluorenol.

Selon une variante de l'invention, les proportions de l'organopolysiloxane **A** et de l'organohydrogénopolysiloxane **B** sont telles que le rapport molaire des atomes d'hydrogène liés au silicium dans l'organohydrogénopolysiloxane **B** sur les radicaux alcényles liés au silicium dans l'organopolysiloxane **A** est compris entre 0,4 et 10.

Avantageusement, l'organopolysiloxane **A** selon l'invention présente:
- au moins deux motifs siloxyles de formule **(A.1):**

   Tₐ Z_{b} SiO₄-_{(a+b)/2} **(A.1)**

   dans laquelle :
   - T est un groupe alcényle,
   - Z est un groupe hydrocarboné monovalent, exempt d'action défavorable sur l'activité du catalyseur et choisi parmi le groupe constitué par les groupes alkyles ayant de 1 à 8 atomes de carbone inclus, éventuellement substitués par au moins un atome d'halogène, et les groupes aryles, et
   - a est égal à 1 ou 2, b est égale à 0, 1 ou 2 et la somme a + b est comprise entre 1 et 3, et
- éventuellement au moins une partie des autres motifs siloxyles sont des motifs de formule **(A.2):**

   Z_{c} SiO_{4-c/2} **(A.2)**

   dans laquelle:
   - Z a la même signification que ci-dessus et c est égal à 0, 1, 2 ou 3.

En général, l'organopolysiloxane **A** a une viscosité au moins égale à 100 mPa.s et de préférence inférieure à 200.000 mPa.s.

Avantageusement, l'organohydrogénopolysiloxane **B** selon l'invention présente:
- au moins deux, et de préférence au moins trois, motifs siloxyles de formule **(B.1):**

   Hd Le SiO_{4-(d+e)/2} **(B.1**)

   dans laquelle:
   - L est un groupe hydrocarboné monovalent, exempt d'action défavorable sur l'activité du catalyseur et choisi parmi le groupe constitué par les alkyles ayant de 1 à 8 atomes de carbone inclus, éventuellement substitués par au moins un atome d'halogène, et les aryles,
   - H est un atome d'hydrogène, et
   - d est égal à 1 ou 2, e est égal à 0, 1 ou 2, la somme d + e est égale à 1, 2 ou 3, et
- éventuellement, au moins une partie des autres motifs siloxyles sont des motifs de formule **(B.2):**

   Lg SiO_{4-g/2} **(B.2)**

   dans laquelle:
   - L a la même signification que ci-dessus et g est égal à 0, 1, 2 ou 3.

En général, la viscosité dynamique de l'organohydrogénopolysiloxane **B** est au moins égale à 10 mPa.s et, de préférence elle est comprise entre 20 et 1000 mPa.s.

Avantageusement, les proportions des motifs siloxyles **(A.1)** et **(B.1)** sont telles que le rapport molaire des atomes d'hydrogène liés au silicium dans l'organohydrogénopolysiloxane **B** sur les radicaux alcényles liés au silicium dans , l'organopolysiloxane **A** est compris entre 0,4 et 10.

Selon une variante de l'invention, la composition silicone **X** peut comprendre un ou plusieurs additifs classiques dans le domaine des revêtements anti-adhérents silicones pour support solide, par exemple en papier. Il peut s'agir par exemple d'un additif antibrouillard ("anti-misting") tels que des particules de silice, ou des polyorganosiloxanes branchés,...

Selon une variante, la composition silicone **X** peut aussi comprendre un système modulateur d'adhérence ainsi que des additifs usuels dans ce type d'application tels que: des bactéricides, des agents antigels, des agents de mouillage, des agents anti-mousses, des charges, des latex synthétiques ou des colorants.

Selon un mode de réalisation préféré du procédé selon l'invention à l'étape b) on dépose une quantité comprise entre 0,1 et 5 g/ m² de la composition silicone **X** sur le support souple **S.**

La composition silicone **X** peut être appliquée à l'aide de dispositifs utilisés sur les machines industrielles d'enduction du papier tels qu'une tête d'enduction à cinq rouleaux, des systèmes à lames d'air ou à barre égalisatrice, sur des supports ou matériaux souples, puis durcies par circulation dans des fours-tunnels chauffés à des températures comprises généralement entre 70 et 200 °C; le temps de passage dans ces fours est fonction de la température; celui-ci est généralement de l'ordre de 5 à 15 secondes à une température de l'ordre de 100°C et de l'ordre de 1,5 à 3 secondes à une température de l'ordre de 180°C.

La composition silicone **X** peut être déposée sur tout support souple tel que papiers de types divers (supercalendré, couché, glassine), cartons, feuilles de cellulose, feuilles en métal, films de matière plastique (polyester, polyéthylène, polypropylène...).

Les quantités de compositions déposées sont en général de l'ordre de 0,1 à 5 g par m² de surface à traiter, ce qui correspond au dépôt de couches de l'ordre de 0,1 à 5 µm.

Les matériaux ou supports ainsi enduits peuvent ultérieurement être mis en contact avec des matières adhésives quelconques caoutchoucs, acryliques ou autres, sensibles à la pression. La matière adhésive est alors aisément détachable dudit support ou matériau.

Toutes les viscosités dont il est question dans le présent mémoire correspondent à une grandeur de viscosité dynamique qui est mesurée, de manière connue en soi, à 25°C.

Dans la suite de la présente demande, on décrira de façon conventionnelle les huiles polyorganosiloxanes à l'aide de la notation usuelle dans laquelle on utilise les lettres M, D, T et Q pour désigner divers motifs siloxyle. Dans cette notation, l'atome de silicium d'un motif siloxyle est engagé dans une (M), deux (D), trois (T) ou quatre (Q) liaisons covalentes avec autant d'atomes d'oxygène. Lorsqu'un atome d'oxygène est partagé entre deux atomes de silicium, il est comptabilisé pour ½ et il ne sera pas mentionné dans une formule abrégée. Par contre, si l'atome d'oxygène appartient à un groupe alcoxyle ou hydroxyle lié à un atome de silicium, cette fonction chimique sera indiquée entre parenthèses dans la formule abrégée. Par défaut, on considère que les liaisons restantes de l'atome de silicium sont engagées avec un atome de carbone. Généralement, les groupes hydrocarbonés liés au silicium par une liaison C-Si ne sont pas mentionnés et correspondent le plus souvent à un groupe alkyle, par exemple un groupe méthyle. Lorsqu'un groupe hydrocarboné possède une fonction particulière, il est indiqué en exposant. Par exemple, les formules abrégées:
- M^{Vi} représente un motif dans lequel l'atome de silicium est lié à un atome d'oxygène et dont l'un des groupes hydrocarbonés formant une liaison C-Si est un groupe vinyle, c'est-à-dire un motif dialkylvinylsiloxyle, et
- M' représente un motif dans lequel l'atome de silicium est lié à un atome d'hydrogène, à un atome et à deux groupements méthyles.

A titre d'ouvrage de référence, on peut citer : NOLL " Chemistry and technology of silicones ", chapitre 1.1, page 1-9, Academic Press, 1968 - 2ème édition.

Les exemples non-limitatifs qui suivent permettront de mieux comprendre l'invention et d'en saisir tous ses avantages et variantes de réalisation.

### EXEMPLES

### Produits utilisés

Les valeurs de pKa sont celles mesurées en solution aqueuse et à 25°C.
- Huile polydiméthylsiloxane vinylée bout de chaîne **(A.1):** de formule moyenne M^{vi}D₇₅M^{vi} et de viscosité à 25°C = 100 mPa.s.
- Huile polydiméthylsiloxane vinylée bout de chaîne **(A.2):** de formule moyenne M^{vi}D₁₁₀D^{vi}M^{vi}.
- Huile polyméthylhydrogénosiloxane **(B.1):** de formule moyenne MD'₁₀D₁₀M.
- Huiles polyméthylhydrogénosiloxanes **(B.2):** mélange: 18% en poids d'une huile de formule moyenne M_{1,4}D'₁₄D₂₁M_{0,6}.+ 82% d'une huile polyméthylhydrogénosiloxanes de structure MD'₄₀M.
- Catalyseur **(C)** : Pt Karstedt contenant 2800 ppm de Pt.

### - Inhibiteurs selon l'invention:

**(D1.I1)** : 1-éthynyl-1-cyclohexanol (ECH)
**(D1.I2)** : 3,7,11-triméthyl-1-dodécyne-3-ol (TMDDO) 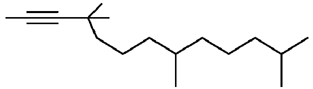
**(D1.I3):** le 2-méthyl-3-butyn-2-ol (MBT)

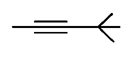

### - Inhibiteurs comparatifs:

**(D1.C1) :** diallyl maléate (DAM) 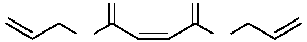
**(D1.C2):** tétraméthyltétravinylcyclotétrasiloxane (D₄^{vi}).

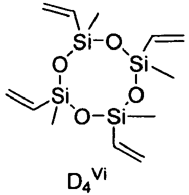

### - Acides pour essais selon l'invention:

- acide heptanoïque **(D2.I2):** CH₃(CH₂)₅COOH, (pK1=: 4,89).
- acide orthophosphorique **(D2.I3):** (H₃PO₄) (pK1= 2,15).

### - Acides pour essais comparatifs:

- acide trifluoroacétique **(D2.I1):** CF₃COOH; (pK1=: 0,23).
- acide malonique (en solution dans l'alcool isopropylique) **(D2.I4):** (pK1= 2,85).
- acide méthanesulfonique **(D2.C1):** (pK1= -1,9).
- ester silylé de l'acide phosphorique **(D2.C1):** qui est vendu sous l'appellation «SOL 110 » ou " SOLUTION 110 " par la société Bluestar Silicones (anciennement Rhodia Silicones et plus anciennement encore Rhone-Poulenc Silicones). Ce stabilisant est cité par exemple dans la demande US-2005-0282453 (page 12, paragraphe [0268] ou la demande internationale WO1999005231 (page 13, ligne 13).

### Exemple 1: Inhibiteur (D1.I1) : 1-éthynyl-1-cyclohexanol (ECH)

Des compositions sont préparées à partir des composants listés dans le Tableau 1 suivant:

**Tableau 1**

| | Composition (I-1) | Composition (I-2) | Composition (C-1) | Composition (C-2) | Composition (C-2 bis) |
|---|---|---|---|---|---|
| Huile polydiméthylsiloxane vinylée **(A.1)** [mmole] | 3,80 | 3,80 | 3,80 | 3,80 | 3,80 |
| Huile polyméthylhydrogéno siloxane **(B.1)** [mmole] | 6,84 | 6,84 | 6,84 | 6,84 | 6,84 |
| Catalyseur (C) [mmole] | 0,0014 | 0,0014 | 0,0014 | 0,0014 | 0,0014 |
| Inhibiteur ECH **(D1.I1)** [mmole] | 0,12 | 0,12 | 0,12 | 0,12 | 0,12 |
| acide **(D2.I1)** [mmole] | 0,045 | 0 | 0 | 0 | 0 |
| acide **(D2**.**I2)** [mmole] | 0 | 0,045 | 0 | 0 | 0 |
| acide **(D2.C1)** [mmole] | 0 | 0 | 0,045 | 0 | 0 |
| acide **(D2.C2)** [mmole] | 0 | 0 | 0 | 0 | 0,045 |

**Tableau 2:**

| Ratio molaire | |
|---|---|
| [atome d'hydrogène liés au silicium de**(B.1)]** / [radicaux vinyles liés au silicium dans l'organopolysiloxane **(A.1)]** | 1,8 |
| Inhibiteur ECH **(D1**.**I1)**/ [acide **D2]** | 2,7 |
| [acide **D2**]/[catalyseur **C**] | 32,14 |
| [inhibiteur ECH **(D1.I1)]**/ [acide **D2]** | 2,7 |
| [inhibiteur ECH **(D1.I1)]**/ [catalyseur **C]** | 86,42 |

### Mode opératoire:

L'inhibiteur ECH **(D1.I1)** est préalablement ajouté à l'huile polydiméthylsiloxane vinylée **(A.1).** Après homogénéisation du mélange, on introduit alors l'huile polyméthylhydrogéno siloxane **(B.1)** puis l'acide à tester, sauf pour la composition (C-2), et enfin le catalyseur **(C).** Un échantillon pour chaque composition est prélevé et analysé en DSC (« Differential Scanning Calorimetry », appareil de type METLER). L'analyse est effectuée en capsule aluminium et en utilisant une rampe de température de 25 à 250°C avec un gradient de 10°C/min. On mesure aussi le temps nécessaire à la réticulation à température ambiante et la durée de vie de bain.

Les profils thermiques, les données caractéristiques des pics exothermiques (T°C onset, T°C pic et T°C endset) et la durée de vie de bain sont représentés dans le Tableau 3 suivant.

**Tableau 3 : Résultats par analyse DSC**

| | DeltaH (J/g) | T°C onset | T°C pic | T°C endset | Duré de vie de bain à 25°C |
|---|---|---|---|---|---|
| Composition (C-2) | 47 | 109 | 113 | 114 | >48h |
| Composition (I-1) | 48 | 93 | 98 | 99 | >48h |
| Composition (I-2) | 47 | 83 | 88 | 91 | Entre 12 et 24h |
| Composition (C-1) | 44 | 72 | 79 | 83 | 1h |
| Composition (C-2bis) | 5 | 85 | 90 | 96 | >48h |

On constate que la durée de vie de la composition (C-1) qui correspond à l'ajout d'un acide ayant un pKa de -1,9 ne permet pas de d'obtenir une stabilité suffisante pour un usage industriel.

Pour la composition (C-2bis), on remarque que la valeur de la chaleur de réaction mesurée est de 5 J/g DeltaH (Tableau 3) très inférieure à toutes les compositions testées. En effet, pour cette composition la réticulation est incomplète ne permettant pas d'obtenir un revêtement réticulé.

Par contre, l'ajout d'acides selon l'invention permet d'obtenir des durées de vie de bain satisfaisante pour un usage industriel. De plus, la levée d'inhibition est plus rapide dans le cas où les acides sont présents dans les compositions. Si on compare la levée d'inhibition des compositions (I-1) et (I-2) versus la composition (C-1) on obtient:
- pour l'acide trifluoroacétique, compositions (I-1): ΔT pic = 25°C, et
- pour l'acide heptanoïque, compositions (I-2): ΔT pic = 15°C.

### Exemple 2: Inhibiteur (D1.I1) : 1-éthynyl-1-cyclohexanol (ECH)

Des compositions sont préparées à partir des composants listés dans le Tableau 4 suivant et suivant le même mode opératoire que dans l'Exemple 1.

**Tableau 4**

| | Composition (I-3) | Composition (I-4) | Composition (I-5) | Composition (I-6) | Composition (C-3) | Composition (C-4) |
|---|---|---|---|---|---|---|
| Huile polydiméthylsiloxane vinylée **(A.2)** [g] | 100 | 100 | 100 | 100 | 100 | 100 |
| Huile polyméthylhydrogéno siloxane **(B.2)** [g] | 7,5 | 7,5 | 7,5 | 7,5 | 7,5 | 7,5 |
| Catalyseur **(C)** (ppm, poids/poids total de la composition) | 50 | 50 | 50 | 50 | 50 | 50 |
| Inhibiteur ECH **(D1.I1)** (ppm, poids/poids total de la composition) | 1500 | 1500 | 1500 | 1500 | 1500 | 1500 |
| acide **(D2.I1)** (ppm, poids/poids total de la composition) | 1000 | 0 | 0 | 0 | 0 | 0 |
| acide **(D2.I2)** (ppm, poids/poids total de la composition) | 0 | 1000 | 0 | 0 | 0 | 0 |
| acide **(D2.I3)** (ppm, poids/poids total de la composition) | 0 | 0 | 1000 | 0 | 0 | 0 |
| acide **(D2.I4)** (ppm, poids/poids total de la composition) | 0 | 0 | 0 | 1000 | 0 | 0 |
| acide **(D2.C1)** (ppm, poids/poids total de la composition) | 0 | 0 | 0 | 0 | 1000 | 0 |

| | | | | | | |
|---|---|---|---|---|---|---|
| Ratio molaire [H/Vinyle] = 1,8 | | | | | | |

Un échantillon pour chaque composition est prélevé et analysé en DSC (« Differential Scanning Calorimetry », appareil de type METLER). L'analyse est effectuée en capsule aluminium et en utilisant une rampe de température de 30 à 200°C avec un gradient de 10°C/min. On mesure aussi le temps nécessaire à la réticulation à température ambiante et la durée de vie de bain à 25°C et 40°C.

Les profils thermiques, les données caractéristiques des pics exothermiques (T°C onset, T°C pic et T°C endset) et la durée de vie de bain sont représentés dans le Tableau 5 suivant.

**Tableau 5: Résultats par analyse DSC**

| | DeltaH (J/g) | T°C onset | T°C pic | T°C endset | Durée de vie de bain à 25°C | Durée de vie de bain à 40°C |
|---|---|---|---|---|---|---|
| Composition (C-4) | 44 | 99 | 104 | 107 | 24h | 7h |
| Composition (I-4) | 39 | 94 | 99 | 103 | 24h | 7h |
| Composition (I-5) | 42 | 90 | 95 | 101 | 24h | 7h |
| Composition (I-6) | 45 | 87 | 92 | 97 | 24h | Entre 4 et 5h |
| Composition (I-3) | 41 | 75 | 82 | 91 | Non mesuré | 1h |
| Composition (C-3) | 38 | 72 | 80 | 93 | <1h | <30 mn |

On constate que la durée de vie à 25°C et 40°C de la composition (C-3) qui correspond à l'ajout d'un acide ayant un pKa de -1,9 ne permet pas d'obtenir une stabilité suffisante pour un usage industriel.

Par contre, l'ajout d'acides selon l'invention permet d'obtenir des durées de vie de bain satisfaisante pour un usage industrielle. De plus, la levée d'inhibition est plus rapide dans le cas où les acides sont présents dans les compositions.

On remarque que le meilleur compromis entre stabilité de bain et baisse de la température de levée d'inhibition (accélération de la vitesse de réticulation) est obtenu avec les acides heptanoïque (D2.I2) et orthophosphorique. (D2.I3).

### Exemple 3 : Inhibiteur (D1.I3) 2-méthyl-3-butyn-2-ol (MBT)

Des compositions sont préparées à partir des composants listés dans le Tableau 6 suivant:

**Tableau 6**

| | Composition (I-7) | Composition (I-8) | Composition (I-9) | Composition (C-5) |
|---|---|---|---|---|
| Huile polydiméthylsiloxane vinylée **(A.1)** [mmole] | 3,80 | 3,80 | 3,80 | 3,80 |
| Huile polyméthylhydrogéno siloxane **(B.1)** [mmole] | 6,84 | 6,84 | 6,84 | 6,84 |
| Catalyseur (C) [mmole] | 0,0014 | 0,0014 | 0,0014 | 0,0014 |
| Inhibiteur **(D1.I3)** (MBT) [mmole] | 0,484 | 0,484 | 0,484 | 0,484 |
| acide **(D2.I1)** [mmole] | 0,045 | 0 | 0 | 0 |
| acide **(D2.I2)** [mmole] | 0 | 0,045 | 0 | 0 |
| acide **(D2.I3)** [mmole] | 0 | 0 | 0,045 | 0 |

Les compositions sont préparées selon le mode opératoire décrit dans l'Exemple 1.

Les profils thermiques, les données caractéristiques des pics exothermiques (T°C onset, T°C pic et T°C endset) et la durée de vie de bain sont représentés dans le Tableau 7 suivant.

**Tableau 7 : Résultats par analyse DSC**

| | deltaH (J/g) | T°C onset | T°C pic | T°C endset | Duré de vie de bain à 25°C |
|---|---|---|---|---|---|
| Composition (C-5) | 51 | 97 | 101 | 104 | Entre 20 et 24h |
| Composition (I-9) | 47 | 88 | 94 | 97 | Entre 20 et 24h |
| Composition (I-8) | 48 | 85 | 89 | 92 | Entre 20 et 24h |
| Composition (I-7) | 46 | 78 | 83 | 85 | Entre 20 et 24h |

Avec les compositions selon l'invention (I-8) à (I-9), nous obtenons bien une baisse de la température de levée d'inhibition (accélération de la vitesse de réticulation) sans détériorer la durée de vie de bain à 25°C.

### Exemple 4 : Inhibiteur (D1.I2) : 3,7.11-triméthyl-1-dodécyne-3-ol (TMDDO)

Des compositions sont préparées à partir des composants listés dans le Tableau 8 suivant:

**Tableau 8**

| | Composition (I-10) | Composition (I-11) | Composition (I-12) | Composition (C-6) |
|---|---|---|---|---|
| Huile polydiméthylsiloxane vinylée **(A.1)** [mmole] | 3,80 | 3,80 | 3,80 | 3,80 |
| Huile polyméthylhydrogéno siloxane **(B.1)** [mmole] | 6,84 | 6,84 | 6,84 | 6,84 |
| Catalyseur (C) [mmole] | 0,0014 | 0,0014 | 0,0014 | 0,0014 |
| Inhibiteur **(D1.I2)** (TMDDO) [mmole] | 0,121 | 0,121 | 0,121 | 0,121 |
| acide **(D2.I1)** [mmole] | 0,045 | 0 | 0 | 0 |
| acide **(D2.I2)** [mmole] | 0 | 0,045 | 0 | 0 |
| acide **(D2.I3)** [mmole] | 0 | 0 | 0,045 | 0 |

Les compositions sont préparées selon le mode opératoire décrit dans l'Exemple 1.

Les profils thermiques, les données caractéristiques des pics exothermiques (T°C onset, T°C pic et T°C endset) et la durée de vie de bain sont représentés dans le Tableau 9 suivant.

**Tableau 9 : Résultats par analyse DSC**

| | deltaH (J/g) | T°C onset | T°C pic | T°C endset | Duré de vie de bain à 25°C |
|---|---|---|---|---|---|
| Composition (C-6) | 47 | 123 | 125 | 126 | >48h |
| Composition (I-12) | 48 | 119 | 123 | 123 | >48h |
| Composition (I-11) | 48 | 116 | 119 | 120 | >48h |
| Composition (I-10) | 48 | 112 | 115 | 117 | Entre 20 et 24h |

Avec les compositions selon l'invention (I-11) et (I-12), nous obtenons bien une baisse de la température de levée d'inhibition et ainsi à une accélération de la vitesse de réticulation tout en obtenant des durées de vie de bain semblables aux compositions de références (C-6) et composition (I-10).

### Exemple 5 : - Inhibiteur diallyl maléate (DAM) (D1.C1) comparatif

La composition (I-1) décrite dans le Tableau 1 a été préparée suivant l'Exemple 1, en remplaçant dans les mêmes quantités l'inhibiteur ECH **(D1.I1)** par l'inhibiteur (D1.C1): diallyl maléate (DAM) => Composition (C-7). Cette composition (C-7) est comparée à la composition (C-2) (référence sans ajout d'acide) décrite dans l'Exemple 1.

Les profils thermiques, les données caractéristiques des pics exothermiques (T°C onset, T°C pic et T°C endset) sont représentés dans le Tableau 10 suivant.

**Tableau 10 : Résultats par analyse DSC**

| | deltaH (J/g) | T°C onset | T°C pic | T°C endset |
|---|---|---|---|---|
| Composition (C-2) | 51 | 108 | 115 | 118 |
| Composition (C-7) | 49 | 107 | 114 | 117 |

Contrairement aux essais précédents avec les alcools α-acétyléniques, l'ajout d'acide dans des compositions de polyaddition incluant le DAM comme retardateur ne permet pas de baisser la température de levée d'inhibition.

### Exemple 6 Inhibiteur tétraméthyltétravinylcyclotétrasiloxane (D₄^{vi}) (D1.C2):

La composition (I-1) décrite dans le Tableau 1 a été préparée suivant l'Exemple 1, en remplaçant dans les mêmes quantités l'inhibiteur ECH (**D1**.**I1**) par l'inhibiteur (D1.C2): D₄^{vi} => Composition (C-8). Cette composition (C-8) est comparée à la composition (C-2) (référence sans ajout d'acide) décrite dans l'Exemple 1.

Les profils thermiques, les données caractéristiques des pics exothermiques (T°C onset, T°C pic et T°C endset) sont représentés dans le Tableau 11 suivant.

**Tableau 11 : Résultats par analyse DSC**

| | deltaH (J/g) | T°C onset | T°C pic | T°C endset |
|---|---|---|---|---|
| Composition (C-2) | 46 | 73 | 101 | 118 |
| Composition (C-7) | 73 | 76 | 103 | 120 |

Comme pour l'essai avec le DAM (Exemple 5), l'ajout d'acide dans des compositions de polyaddition incluant le D₄^{vi} comme retardateur ne permet pas de baisser la température de levée d'inhibition. Les bons résultats obtenus sont donc limités aux formulations intégrant un alcool α-acétylénique comme retardateur.

## Revendications

1. Procédé d'enduction sur un support souple **S** d'une composition silicone **X** précurseur d'un élastomère et réticulable par des réactions de polyaddition comprenant les étapes a), b) et c) suivantes :
a) on prépare une composition silicone **X** réticulable en élastomère par des réactions de polyaddition, comprenant:
(1) au moins un organopolysiloxane **A** comportant par molécule au moins deux radicaux alcényles liés à des atomes de silicium,
(2) au moins un organohydrogénopolysiloxane **B** comportant par molécule au moins deux atomes d'hydrogène liés à des atomes de silicium,
(3) au moins un catalyseur **C** composé d'au moins un métal appartenant au groupe du platine;
(4) au moins un inhibiteur **D** qui est susceptible d'être obtenu par mélange, éventuellement in situ:
- d'au moins un inhibiteur **D1** qui est un alcool α-acétylénique de formule **(1)** suivante :
(R¹)(R²)C(OH)-C≡CH **(1)**
- les radicaux R¹ et R², identiques ou différents, représentent, indépendamment l'un de l'autre, un groupe alkyle monovalent linéaire ou ramifié, un groupement cycloalkyle, un groupe (cycloalkyl)alkyle, un groupement aromatique ou un groupe arylalkyle, et
- les radicaux R¹ et R² peuvent être liés deux à deux de manière à former un cycle aliphatique à 5, 6, 7 ou 8 chaînons éventuellement substitué par un ou plusieurs substituants, et
- d'au moins un acide **D2** présentant en solution aqueuse et à 25 °C au moins un pKa dont la valeur est comprise dans l'intervalle suivant -0,9 ≤ pKa ≤ +6,5 et qui est l'acide orthophosphorique ou l'acide heptanoïque,
lesdits constituants **D1** et **D2** étant initialement présents dans ladite composition silicone **X** dans des quantités suffisantes pour:
- maintenir l'inhibition du catalyseur **C** de manière à éviter la formation d'un gel ou d'un élastomère lorsque ladite composition silicone **X** est stockée à température ambiante, et
- permettre la dégradation partielle ou complète dudit alcool acétylénique **D1** par réaction chimique entre l'inhibiteur **D1** et l'acide **D2** lorsque la composition silicone **X** est durcie par chauffage à une température supérieure à 60°C, et
- avec la condition supplémentaire que ladite composition silicone **X** ne contient pas d'eau et en ce que le ratio molaire [inhibiteur **D1**]/[catalyseur **C]** est compris entre 10 et 60 et le ratio molaire [acide **D2**]/[catalyseur **C**] est compris entre 10 et 60,
b) puis on dépose de manière continue ou discontinue ladite composition silicone **X** sur ledit support souple **S**, et
c) on fait réticuler la composition silicone **X** par chauffage à une température supérieure à 60°C, de préférence comprise entre 70°C et 200°C.

2. Procédé d'enduction selon la revendication 1 **caractérisé en ce que** le support souple **S** est en papier, en textile, en carton, en métal ou en matière plastique.

3. Procédé d'enduction selon la revendication 1 ou 2 **caractérisé en ce que** le support souple **S** est en textile, en papier, en polychlorure de vinyle (PVC), en polyester, en polypropylène, en polyamide, en polyéthylène, en polyuréthanne, en tissus de fibres de verre non tissés ou en polyéthylène téréphtalate (PET).

4. Procédé d'enduction selon la revendication 1 **caractérisé en ce que** le ratio molaire [inhibiteur **D1**]/[acide **D2]** est compris entre 0,1 et 10, de préférence entre 0,5 et 5.

5. Procédé d'enduction selon l'une quelconque des revendications 1 ou 4 dans lequel l'alcool acétylénique **D1** est choisi parmi le groupe constitué par les composés suivants:
1-éthynyl-1-cyclopentanol ; 1-éthynyl-1-cyclohexanol ; 1-éthynyl-1-cycloheptanol ; 1-éthynyl-1-cyclooctanol ; 3-méthyl-1-butyn-3-ol ; 3-méthyl-1-pentyn-3-ol ; 3-méthyl-1-hexyn-3-ol ; 3-méthyl-1-heptyn-3-ol ; 3-méthyl-1-octyn-3-ol ; 3-méthyl-1-nonyn-3-ol ; 3-méthyl-1-decyn-3-ol ; 3-méthyl-1-dodecyn-3-ol ; 3-éthyl-1-pentyn-3-ol ; 3-éthyl-1-hexyn-3-ol ; 3-éthyl-1-heptyn-3-ol ; 3-butyn-2-ol ; 1-pentyn-3-ol ; 1-hexyn-3-ol ; 1-heptyn-3-ol ; 5-méthyl-1-hexyn-3-ol ; 3,5-diméthyl-1-hexyn-3-ol ; 3-isobutyl-5-méthyl-1-hexyn-3-ol ; 3,4,4-triméthyl-1-pentyn-3-ol ; 3-éthyl-5-méthyl-1-heptyn-3-ol ; 4-éthyl-1-octyn-3-ol ; 3,7,11-triméthyl-1-dodecyn-3-ol ; 1,1-diphényl-2-propyn-1-ol et 9-éthynyl-9-fluorenol.

6. Procédé d'enduction selon la revendication 1 **caractérisée en ce que** les proportions de l'organopolysiloxane **A** et de l'organohydrogénopolysiloxane **B** sont telles que le rapport molaire des atomes d'hydrogène liés au silicium dans l'organohydrogénopolysiloxane **B** sur les radicaux alcényles liés au silicium dans l'organopolysiloxane **A** est compris entre 0,4 et 10.

7. Procédé d'enduction selon la revendication 1 **caractérisée en ce qu'**à l'étape b) on dépose une quantité comprise entre 0,1 et 5 g/ m² de la composition silicone **X** sur le support souple **S.**

## Patentansprüche

1. Verfahren zum Auftragen einer Silikonzusammensetzung **X,** die eine Vorstufe eines Elastomers darstellt und durch Polyadditionsreaktionen vernetzbar ist, auf einen flexiblen Träger **S,** umfassend die folgenden Schritte a), b) und c):
a) man stellt eine durch Polyadditionsreaktionen zu einem Elastomer vernetzbare Silikonzusammensetzung **X** her, die Folgendes umfasst:
(1) mindestens ein Organopolysiloxan **A,** das pro Molekül mindestens zwei an Siliciumatome gebundene Alkenylreste umfasst,
(2) mindestens ein Organohydrogenopolysiloxan **B,** das pro Molekül mindestens zwei an Siliciumatome gebundene Wasserstoffatome umfasst,
(3) mindestens einen Katalysator **C,** der aus mindestens einem Metall der Platingruppe besteht;
(4) mindestens einen Inhibitor **D,** der erhältlich ist durch Mischen, gegebenenfalls in situ:
- mindestens eines Inhibitors **D1,** bei dem es sich um einen α-acetylenischen Alkohol der folgenden Formel **(1)** handelt:
(R¹) (R²) C (OH) -C=CH **(1)**
- die Reste R¹ und R² gleich oder verschieden sind und unabhängig voneinander für eine lineare oder verzweigte einwertige Alkylgruppe, eine Cycloalkylgruppe, eine (Cycloalkyl)alkylgruppe, eine aromatische Gruppe oder eine Arylalkylgruppe stehen und
- die Reste R¹ und R² paarweise so verbunden sein können, dass sie einen 5-, 6-, 7- oder 8-gliedrigen aliphatischen Ring bilden, der gegebenenfalls durch einen oder mehrere Substituenten substituiert ist, und
- mindestens einer Säure **D2,** die in wässriger Lösung und bei 25°C mindestens einen pKa-Wert im Intervall von -0,9 ≤ pKa ≤ +6,5 aufweist und bei der es sich um Orthophosphorsäure oder Heptansäure handelt,
wobei die Bestandteile **D1** und **D2** anfänglich in der Silikonzusammensetzung **X** in Mengen vorliegen, die ausreichen, um:
- die Inhibierung des Katalysators **C** zur Vermeidung der Bildung eines Gels oder eines Elastomers bei Lagerung der Silikonzusammensetzung **X** bei Umgebungstemperatur aufrechtzuerhalten und
- den teilweisen oder vollständigen Abbau des acetylenischen Alkohols **D1** durch chemische Reaktion zwischen dem Inhibitor **D1** und der Säure **D2** beim Härten der Silikonzusammensetzung **X** durch Erhitzen auf eine Temperatur von mehr als 60°C zu erlauben, und
- mit der zusätzlichen Maßgabe, dass die Silikonzusammensetzung **X** kein Wasser enthält und dass das Molverhältnis [Inhibitor **D1**]/[Katalysator **C**] zwischen 10 und 60 liegt und das Molverhältnis [Säure **D2**]/[Katalysator **C**] zwischen 10 und 60 liegt,
b) man bringt die Silikonzusammensetzung **X** kontinuierlich oder diskontinuierlich auf den flexiblen Träger **S** auf, und
c) man vernetzt die Silikonzusammensetzung **X** durch Erhitzen auf eine Temperatur von mehr als 60°C, vorzugsweise zwischen 70°C und 200°C.

2. Auftragsverfahren nach Anspruch 1, **dadurch gekennzeichnet, dass** der flexible Träger **S** aus Papier, Textil, Karton, Metall oder Kunststoff ist.

3. Auftragsverfahren nach Anspruch 1 oder 2, **dadurch gekennzeichnet, dass** der flexible Träger **S** aus Textil, Papier, Polyvinylchlorid (PVC), Polyester, Polypropylen, Polyamid, Polyethylen, Polyurethan, Glasfaservliesstoffen oder Polyethylenterephthalat (PET) ist.

4. Auftragsverfahren nach Anspruch 1, **dadurch gekennzeichnet, dass** das Molverhältnis [Inhibitor **D1**]/[Säure **D2**] zwischen 0,1 und 10, vorzugsweise zwischen 0,5 und 5, liegt.

5. Auftragsverfahren nach einem der Ansprüche 1 oder 4, bei dem der acetylenische Alkohol **D1** aus der Gruppe bestehend aus den folgenden Verbindungen ausgewählt wird:
1-Ethinyl-1-cyclopentanol; 1-Ethinyl-1-cyclohexanol; 1-Ethinyl-1-cycloheptanol; 1-Ethinyl-1-cyclooctanol; 3-Methyl-1-butin-3-ol; 3-Methyl-1-pentin-3-ol; 3-Methyl-1-hexin-3-ol; 3-Methyl-1-heptin-3-ol; 3-Methyl-1-octin-3-ol; 3-Methyl-1-nonyl-3-ol; 3-Methyl-1-decin-3-ol; 3-Methyl-1-dodecin-3-ol; 3-Ethyl-1-pentin-3-ol; 3-Ethyl-1-hexin-3-ol; 3-Ethyl-1-heptin-3-ol; 3-Butin-2-ol; 1-Pentin-3-ol; 1-Hexin-3-ol; 1-Heptin-3-ol; 5-Methyl-1-hexin-3-ol; 3,5-Dimethyl-1-hexin-3-ol; 3-Isobutyl-5-methyl-1-hexin-3-ol; 3,4,4-Trimethyl-1-pentin-3-ol; 3-Ethyl-5-methyl-1-heptin-3-ol; 4-Ethyl-1-octin-3-ol; 3,7,11-Trimethyl-1-dodecin-3-ol; 1,1-Diphenyl-2-propin-1-ol und 9-Ethinyl-9-fluorenol.

6. Auftragsverfahren nach Anspruch 1, **dadurch gekennzeichnet, dass** die Anteile des Organopolysiloxans **A** und des Organohydrogenopolysiloxans **B** so beschaffen sind, dass das Molverhältnis von siliciumgebundenen Wasserstoffatomen in dem Örganohydrogenopolysiloxan **B** zu siliciumgebundenen Alkenylresten in dem Organopolysiloxan **A** zwischen 0,4 und 10 liegt.

7. Auftragsverfahren nach Anspruch 1, **dadurch gekennzeichnet, dass** man in Schritt b) eine Menge zwischen 0,1 1 und 5 g/m² der Silikonzusammensetzung **X** auf den flexiblen Träger **S** aufbringt.

## Claims

1. Method of coating on a flexible support **S** of a silicone composition **X** that is a precursor for an elastomer and that is crosslinkable by polyaddition reactions comprising the following steps a), b) and c):
a) a silicone composition **X** is prepared that is crosslinkable to an elastomer by polyaddition reactions, comprising:
(1) at least one organopolysiloxane **A** comprising per molecule at least two alkenyl radicals bonded to silicon atoms,
(2) at least one organohydrogenopolysiloxane **B** comprising per molecule at least two hydrogen atoms bonded to silicon atoms,
(3) at least one catalyst **C** composed of at least one metal belonging to the platinum group,
(4) at least one inhibitor **D** which is capable of being obtained by mixing, optionally in situ:
- at least one inhibitor **D1** which is an α-acetylenic alcohol of the following formula **(1) :**
(R¹) (R²) C (OH)-C≡CH **(1)**
- the radicals R¹ and R², which are identical or different, represent, independently of each other, a linear or branched monovalent alkyl group, a cycloalkyl group, a (cycloalkyl)alkyl group, an aromatic group or an arylalkyl group, and
- the radicals R¹ and R² may be bonded two by two so as to form a 5-, 6-, 7- or 8-membered aliphatic ring optionally substituted with one or more substituents, and
- at least one acid **D2** which exhibits in aqueous solution at 25 °C at least a pKa whose value is within the following interval -0.9 ≤ pKa ≤ +6.5 and which is orthophosphoric acid or heptanoic acid,
said constituents **D1** and **D2** being initially present in said silicone composition **X** in sufficient quantities to:
- maintain the inhibition of the catalyst **C** so as to avoid the formation of a gel or of an elastomer when said silicone composition **X** is stored at ambient temperature, and
- allow the partial or complete degradation of said acetylenic alcohol **D1** by a chemical reaction between the inhibitor **D1** and the acid **D2** when the silicone composition **X** is hardened by heating to a temperature greater than 60 °C, and
- on the additional condition that said silicone composition **X** does not contain water and in that the [inhibitor **D1**]/[catalyst **C]** molar ratio is between 10 and 60 and the [acid **D2**]/[catalyst **C**] molar ratio is between 10 and 60,
b) then said silicone composition **X** is deposited continuously or batchwise on said flexible support **S,** and
c) the silicone composition **X** is crosslinked by heating to a temperature greater than 60 °C, preferably of between 70 °C and 200 °C.

2. Coating method according to Claim 1, **characterized in that** the flexible support **S** is made of paper, of textile, of cardboard, of metal or of plastic.

3. Coating method according to Claim 1 or 2, **characterized in that** the flexible support **S** is made of textile, of paper, of polyvinyl chloride (PVC), of polyester, of polypropylene, of polyamide, of polyethylene, of polyurethane, of unwoven glass fiber tissues or of polyethylene terephthalate (PET).

4. Coating method according to Claim 1, **characterized in that** the [inhibitor **D1**]/[acid **D2]** molar ratio is between 0.1 and 10, preferably between 0.5 and 5.

5. Coating method according to either one of Claims 1 and 4, in which the acetylenic alcohol **D1** is chosen from the group consisting of the following compounds:
1-ethynyl-1-cyclopentanol; 1-ethynyl-1-cyclohexanol; 1-ethynyl-1-cycloheptanol; 1-ethynyl-1-cyclooctanol; 3-methyl-1-butyn-3-ol; 3-methyl-1-pentyn-3-ol; 3-methyl-1-hexyn-3-ol; 3-methyl-1-heptyn-3-ol; 3-methyl-1-octyn-3-ol; 3-methyl-1-nonyl-3-ol; 3-methyl-1-decyn-3-ol; 3-methyl-1-dodecyn-3-ol; 3-ethyl-1-pentyn-3-ol; 3-ethyl-1-hexyn-3-ol; 3-ethyl-1-heptyn-3-ol; 3-butyn-2-ol; 1-pentyn-3-ol; 1-hexyn-3-ol; 1-heptyn-3-ol; 5-methyl-1-hexyn-3-ol; 3,5-dimethyl-1-hexyn-3-ol; 3-isobutyl-5-methyl-1-hexyn-3-ol; 3,4,4-trimethyl-1-pentyn-3-ol; 3-ethyl-5-methyl-1-heptyn-3-ol; 4-ethyl-1-octyn-3-ol; 3,7,11-trimethyl-1-dodecyn-3-ol; 1,1-diphenyl-2-propyn-1-ol and 9-ethynyl-9-fluorenol.

6. Coating method according to Claim 1, **characterized in that** the proportions of the organopolysiloxane **A** and of the organohydrogenopolysiloxane **B** are such that the molar ratio between the hydrogen atoms bonded to the silicon in the organohydrogenopolysiloxane **B** on the alkenyl radicals bonded to the silicon in the organopolysiloxane **A** is between 0.4 and 10.

7. Coating method according to Claim 1, **characterized in that** in step b), a quantity of between 0.1 and 5 g/m² of the silicone composition **X** is deposited on the flexible support **S.**
